# EUROPEAN PATENT APPLICATION

(11) **EP 1 548 330 A2**
(43) Date of publication of application: **29.06.2005**
(21) Application number: 04030364.6
(22) Date of filing: 21.12.2004
(51) Int. Cl.: F16H 55/28, F16H 55/18

(54) **Resin backlashless gear and resin backlashless rack**

(30) Priority: 24.12.2003 JP 2003428184
(71) Applicant: ENPLAS CORPORATION, Kawaguchi-shi, Saitama 332-0034 (JP)
(72) Inventor: Fukizawa, Tai, Minami-ku Saitama-shi Saitama 336-0016 (JP)
(74) Representative: Manitz, Finsterwald & Partner GbR

(57) **Abstract**

In a resin backlashless gear 1, the radial outer portions 7, 8 of first and second gear portions 3, 4 are connected to a radial inner portion 2 by means of radial ribs 10, 11 so as to be capable of being displaced in rotational directions. The elastic deformation of the radial ribs 10, 11 decreases the dislocation of the teeth 5, 6 of the first and second gear portions 3, 4 in pitch circle directions so that the dislocation is equal to backlash to cause the teeth 5, 6 of the first and second gear portions 3, 4 to elastically contact the teeth of a companion gear meshing with the resin gear to absorb the backlash.

## Description

### BACKGROUND OF THE INVENTION

### Field of the Invention

The present invention generally relates to a resin gear and a resin rack. More specifically, the invention relates to a resin backlashless gear and resin backlashless rack capable of eliminating backlash.

### Description of the Prior Art

In general, gears are designed to provide backlash so as to be capable of smoothly rotating while meshing with a companion gear, in view of manufacturing tolerance, deformation of teeth, meshing deviation due to deflection of shaft, and so forth. However, since backlash is provided by a clearance between teeth of a pair of gears meshing with each other, if rotation and stop are frequently repeated or if normal rotation and reverse rotation are repeated, teeth meshing with each other collide with each other to produce noises. In sensors or the like for measuring rotation transmitted by gears, errors of rotation due to backlash are directly measurement errors, so that backlash is preferably as small as possible.

Therefore, as described in Japanese Patent Laid-Open No. 8-159242 and Japanese Utility Model Laid-Open Nos. 61-20956, 62-45460 and 1-89664, there has been developed a technique for dividing one of a pair of gears meshing with each other into two gear portions in facewidth directions, the divided gear portions being combined to be connected to each other by means of springs so as to be relatively rotatable, and teeth of the divided gear portions being shifted in rotational directions, so that the teeth of the divided gear portions are allowed to contact the teeth of the other gear meshing therewith without clearance to eliminate backlash.

However, in such a structure that the gear portions divided in facewidth directions are combined to be connected to each other by means of the springs, the number of parts and the number of assembling steps are increased, so that there is a problem in that the price of the gears is increased.

Therefore, as disclosed in Japanese Utility Model Laid-Open No. 7-34252, there has been proposed an integrated resin gear wherein two gear portions divided in facewidth directions are connected to each other in axial directions by means of elastically deformable runners. In this gear, the runners have the spring function of connecting the two divided gear portions to each other so as to allow the rotational displacement of the gear portions, so that the elastic force of the runners causes the teeth of the two divided gear portions to elastically contact the teeth of a companion gear meshing with the gear without clearance to absorb backlash. According to such a resin gear disclosed in Japanese Utility Model Laid-Open No. 7-34252, it is possible to decrease the number of parts and to eliminate assembling steps.

However, in the resin gear disclosed in Japanese Utility Model Laid-Open No. 7-34252, since the gear portions divided in facewidth directions are connected to each other by means of the runners extending in axial directions, it is required to sufficiently ensure the length of the runners in order to elastically deform the runners so as to absorb backlash, so that there is a problem in that the resin gear can not be adopted unless the facewidth of the gear is large.

Also in the resin gear disclosed in Japanese Utility Model Laid-Open No. 7-34252, since the runners are thin rods, the shape of a die for molding the gear is complicated, and it is very difficult to mold the gear. Therefore, even if it is possible to mold the gear, it is not possible to sufficiently reduce the price of products.

Furthermore, it is desired that the same backlash eliminating technique as that of a rotatable resin gear is applied to a rack meshing with a pinion.

### SUMMARY OF THE INVENTION

It is therefore an object of the present invention to eliminate the aforementioned problems and to provide an inexpensive resin backlashless gear with a simple structure and an inexpensive resin backlashless rack with a simple structure, without increasing the dimension of facewidth.

In order to accomplish the aforementioned and other objects, according to one aspect of the present invention, a resin gear comprises: a substantially cylindrical inner portion which is rotatable around a rotational axis; first and second gear portions which are arranged so as to be spaced from each other in directions parallel to the rotational axis and so as to surround the inner portion, each of the first and second gear portions having teeth on an outer periphery thereof; a plurality of first ribs extending in radial directions to connect the first gear portion to the inner portion so as to allow the first gear portion to be displaced in rotational directions of the inner portion; and a plurality of second ribs extending in radial directions to connect the second gear portion to the inner portion so as to allow the second gear portion to be displaced in rotational directions of the inner portion, wherein a dislocation in pitch circle directions between the teeth of the first gear portion and the teeth of the second gear portion is set so as to reduce backlash which is set between the teeth of the first and second gear portions and the teeth of a companion gear meshing with the resin gear.

In this resin gear, the dislocation may be greater than the backlash. Each of the first ribs may be a thin plate which extends in facewidth directions so that connecting portions of the thin plate to the first gear portion and to the inner portion extend in facewidth directions, and each of the second ribs may be a thin plate which extends in facewidth directions so that connecting portions of the thin plate to the second gear portion and to the inner portion extend in facewidth directions.

According to another aspect of the present invention, a resin gear comprises: a substantially cylindrical inner portion which is rotatable around a rotational axis; first and second gear portions which are arranged so as to be spaced from each other in directions parallel to the rotational axis and so as to surround the inner portion, each of the first and second gear portions having teeth on an outer periphery thereof; a plurality of ribs extending in radial directions to connect the first gear portion to the inner portion so as to allow the first gear portion to be displaced in rotational directions of the inner portion; and a connecting member connecting the second gear portion to the inner portion, wherein a dislocation in pitch circle directions between the teeth of the first gear portion and the teeth of the second gear portion is set so as to reduce backlash which is set between the teeth of the first and second gear portions and the teeth of a companion gear meshing with the resin gear.

In this resin gear, the dislocation may be greater than the backlash. Each of the ribs may be a thin plate which extends in facewidth directions so that connecting portions of the thin plate to the first gear portion and to the inner portion extend in facewidth directions.

According to a further aspect of the present invention, a resin rack comprises: a base; first and second rack portions having teeth for meshing with a pinion, the first and second rack portions being arranged so as to be spaced from each other in facewidth directions; a plurality of first flexibly deformable ribs connecting the first rack portion to the base; and a plurality of second flexibly deformable ribs connecting the second rack portion to the base, wherein a dislocation in pitch line directions between the teeth of the first rack portion and the teeth of the second rack portion is set so as to reduce backlash which is set between the teeth of the first and second rack portions and the teeth of the pinion meshing with the resin rack.

In this resin rack, the dislocation may be greater than the backlash. Each of the first ribs may be a thin plate which extends in facewidth directions so that connecting portions of the thin plate to the first rack portion and to the base extend in facewidth directions, and each of the second ribs may be a thin plate which extends in facewidth directions so that connecting portions of the thin plate to the second rack portion and to the base extend in facewidth directions.

According to a still further aspect of the present invention, a resin rack comprises: a base; first and second rack portions having teeth for meshing with a pinion, the first and second rack portions being arranged so as to be spaced from each other in facewidth directions; a plurality of flexibly deformable ribs connecting the first rack portion to the base; and a connecting member connecting the second rack portion to the base, wherein a dislocation in pitch line directions between the teeth of the first rack portion and the teeth of the second rack portion is set so as to reduce backlash which is set between the teeth of the first and second rack portions and the teeth of the pinion meshing with the resin rack.

In this resin rack, the dislocation may be greater than the backlash. Each of the ribs may be a thin plate which extends in facewidth directions so that connecting portions of the thin plate to the first rack portion and to the base extend in facewidth directions.

In a resin backlashless gear according to the present invention, the radial outer portion(s) of at least one of first and second gear portions is connected to a radial inner portion by means of radial ribs so as to be capable of being displaced in rotational directions. The elastic deformation of the radial ribs can decrease the dislocation of the teeth of the first and second gear portions in pitch circle directions so that the dislocation is equal to backlash to cause the teeth of the first and second gear portions to elastically contact the teeth of a companion gear meshing with the resin gear to absorb or eliminate the backlash. Therefore, it is possible to form a gear having a small facewidth to which the prior art can not be applied.

The resin backlashless gear according to the present invention has such a simple structure that a molded article can be released from a die in facewidth direction since each of the radial ribs has a thin plate shape. Therefore, since the structure of the die is simpler than that for a conventional resin gears capable of eliminating backlash (e.g., for the resin gear disclosed in Japanese Utility Model Laid-Open No. 7-34252), it is possible to reduce the price of the die, and it is possible to facilitate the molding operation. As a result, according to the present invention, it is possible to reduce the price of products.

In a resin backlashless rack according to the present invention, at least one of first and second rack portions arranged so as to be spaced from each other in facewidth directions is connected to a base by means of flexibly deformable ribs. The elastic deformation of the ribs can decrease the dislocation of the teeth of the first and second rack portions in pitch line directions to cause the teeth of the first and second rack portions to elastically contact the teeth of a pinion meshing with the resin rack to absorb or eliminate the backlash. Therefore, it is possible to form a rack having a small facewidth to which the prior art (e.g., the technique disclosed in Japanese Utility Model Laid-OpenNo. 7-34252) cannotbe applied.

The resin backlashless rack according to the present invention has such a simple structure that a molded article can be released from a die in facewidth direction since each of the ribs has a thin plate shape. Therefore, the rack can be molded by a die having a simple structure. As a result, according to the present invention, it is possible to reduce the price of products.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a perspective view of a preferred embodiment of a resin backlashless gear according to the present invention;
FIG. 2 is a side view of the preferred embodiment of a resin backlashless gear according to the present invention;
FIG. 3 is a longitudinal section of the preferred embodiment of a resin backlashless gear according to the present invention, which is taken along line III-III of FIG. 4;
FIG. 4 is a front view of the preferred embodiment of a resin backlashless gear according to the present invention;
FIG. 5 is a schematic view showing a state that the preferred embodiment of a resin backlashless gear according to the present invention meshes with a companion gear;
FIG. 6 is a perspective view of a preferred embodiment of a resin backlashless rack according to the present invention; and
FIG. 7 is a plan view of the resin backlashless rack of FIG. 6.

### DESCRIPTION OF THE PREFERRED EMBODIMENTS

Referring now to the accompanying drawings, the preferred embodiments of the present invention will be described below in detail.

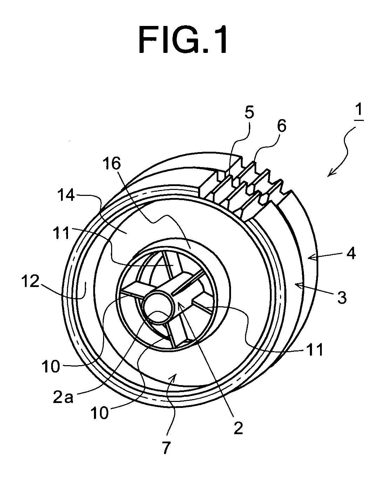

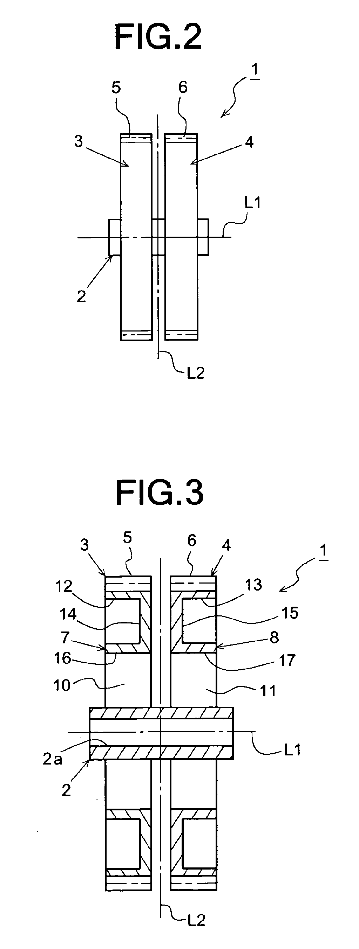

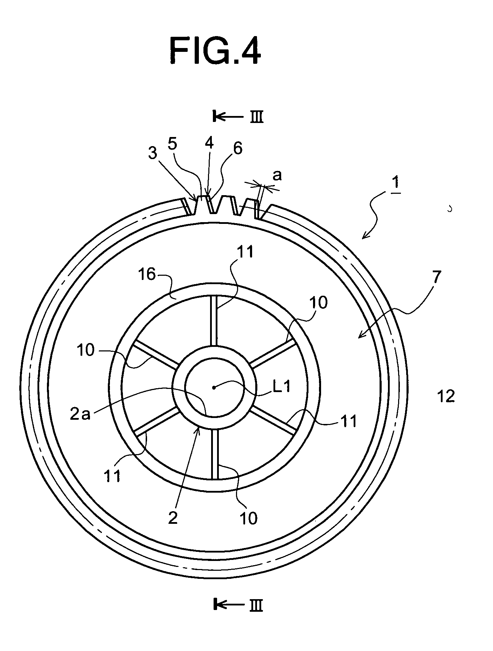

FIGS. 1 through 4 show the preferred embodiment of a resin backlashless gear 1 according to the present invention. FIG. 1 is a perspective view of the resin backlashless gear 1, and FIG. 2 is a side view of the resin backlashless gear 1 (viewed in a direction perpendicular to a rotational axis L1). FIG. 3 is a longitudinal section of the resin backlashless gear 1 taken along line III-III of FIG. 4, and FIG. 4 is a front view of the resin backlashless gear 1 (viewed in a direction parallel to the rotational axis L1).

As shown in these figures, the resin backlashless gear 1 in this preferred embodiment comprises a substantially cylindrical radial inner portion 2, and a pair of gear portions (a first gear portion 3 and a second gear portion 4 ) integrally formed on the outer periphery of the radial inner portion 2 so as to be arranged back to back. The first gear portion 3 and the second gear portion 4 are capable of being separately displaced in rotational directions with respect to the radial inner portion 2. That is, the first gear portion 3 and the second gear portion 4 have radial outer portions 7 and 8 having teeth 5 and 6 on the outer periphery thereof, respectively. The radial outer portions 7 and 8 are connected to the radial inner portion 2 by means of a plurality of radial ribs 10 and 11, respectively. The rigidity of the radial ribs 10 and 11 is lower than the rigidity of the radial outer portions 7, 8 and the rigidity of the radial inner portion 2. If the radial ribs 10 and 11 are elastically deformed, the radial outer portions 7, 8 and the radial inner portion 2 are displaced in the rotational direction as a rigid body. In addition, the first gear portion 3 and the second gear portion 4 are symmetrical with respect to the center line L2 in facewidth directions.

Each of the radial outer portions 7 and 8 comprises a rim 12 or 13 having a large number of teeth 5 or 6 on the outer periphery thereof, a substantially disk-shaped web 14 or 15 extending inwardly in radial directions from one end of the rim 12 or 13 in facewidth directions, and a substantially cylindrical circumferential rib 16 or 17 formed on the inner end of the web 14 or 15. The length of the rim 12 or 13 of the radial outer portion 7 or 8 in facewidth directions is substantially equal to the length of the circumferential rib 16 or 17 in facewidth directions. The inner peripheral surface of the circumferential rib 16 or 17 of the radial outer portion 7 or 8 is connected to the radial inner portion 2 by means of radial ribs 10 or 11.

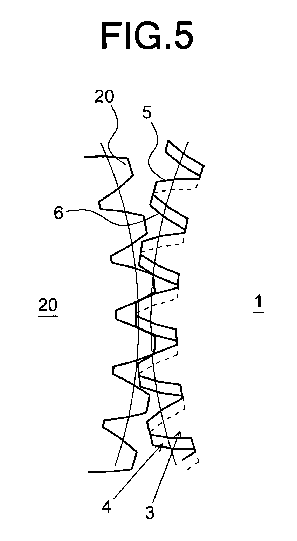

The teeth 5 of the first gear portion 3 and the teeth 6 of the second gear portion 4 are formed so as to have a greater dislocation (a phase difference) a in pitch circle directions than backlash provided between the teeth 5, 6 and the teeth 20 of a companion gear 18 meshing with the gear 1, so that the teeth 5 and 6 are designed to elastically contact the teeth 20 of the companion gear 18 to transmit rotation (see FIG. 5). At this time, the first gear portion 3 and the second gear portion 4 are designed to enter spaces between teeth 20 and 20 of the companion gear 18 in a state that the teeth 5 and 6 are moved in such a direction that the dislocation in pitch circle directions decreases (see FIG. 5).

Each of the radial ribs 10 and 11 has a thin plate shape, and is thinner than that of the circumferential ribs 16 and 17 so as to be elastically deformed at least by such a dimension that the teeth 5 of the first gear portion 3 and the teeth 6 of the second gear portion 4 are allowed to rotate to such an extent that the teeth 5 and 6 can absorb backlash. At this time, the amount of radial deformation of the circumferential ribs 16 and 17 thicker than the radial ribs 10 and 11 is a very small amount which is a negligible amount in comparison with the amount of deformation of the radial ribs 10 and 11. As a result, it is possible to precisely transmit rotation without deteriorating the meshing precision of the resin backlashless gear 1 meshing with the companion gear 20.

As described above, according to this preferred embodiment, the radial outer portions 7 and 8 of the first gear portion 3 and second gear portion 4 are connected to the radial inner portion 2 by means of the radial ribs 10 and 11, respectively, so as to be capable of being displaced in rotational directions, so that the elastic deformation of the radial ribs 10 and 11 can absorb backlash. Therefore, it is possible to form a gear having a small facewidth to which the technique disclosed in Japanese UtilityModel Laid-Open No. 7-34252 can not be applied.

According to the resin backlashless gear in this preferred embodiment, the connecting portions of the radial ribs 10 and 11 to the radial inner portion 2 and to the radial outer portions 7 and 8 (particularly, the circumferential ribs 16 and 17) extend in facewidth directions, so that a portion for molding the first gear portion 3 and a portion for molding the second gear portion 4 can be released from a molding die in facewidth directions. According to such a resin backlashless gear in this preferred embodiment, the structure of the die is simpler than that for a conventional resin gears capable of eliminating backlash (e.g., for the resin gear disclosed in Japanese Utility Model Laid-Open No. 7-34252), so that it is possible to reduce the price of the die. In addition, it is possible to easily separate the molded article from the molding die (to facilitate the molding operation), and it is possible to reduce the number of molding steps. As a result, according to this preferred embodiment, the price of the resin backlashless gear 1 can be lower than that of conventional resin gears capable of eliminating backlash.

While the radial outer portions 7 and 8 of both of the first and second gear portions 3 and 4 of the resin backlashless gear 1 in this preferred embodiment are connected to the radial inner portion 2 by means of the radial ribs 10 and 11 so as to be relatively rotatable with respect to the radial inner portion 2, the present invention should not be limited thereto, but the radial outer portion 7 or 8 of only one of the first and second gear portions 3 and 4 may be connected to the radial inner portion 2 by means of the radial ribs 10 or 11 so as to be displaced in rotational directions while the radial outer portion 8 or 7 of the other gear portion 4 or 3 may be connected to the radial inner portion 2 by means of a web or the like so as not to be displaced in rotational directions. Thus, if the resin backlashless gear 1 is meshed with the companion gear 18, the teeth 5 or 6 of one of the first and second gear portions 3 and 4 are displaced in circumferential directions (in pitch circle directions) with respect to the teeth 6 or 5 of the other gear portion 4 or 3, so that it is possible to absorb backlash.

While the resin backlash gear 1 in this preferred embodiment has had an axial hole 2a in the radial inner portion 2 so that a rotation supporting shaft (not shown) is fitted into the axial hole 2a so as to be smoothly relatively rotatable, the present invention should not be limited thereto, but a rotation supporting shaft may be integrally formed on the radial inner portion 2.

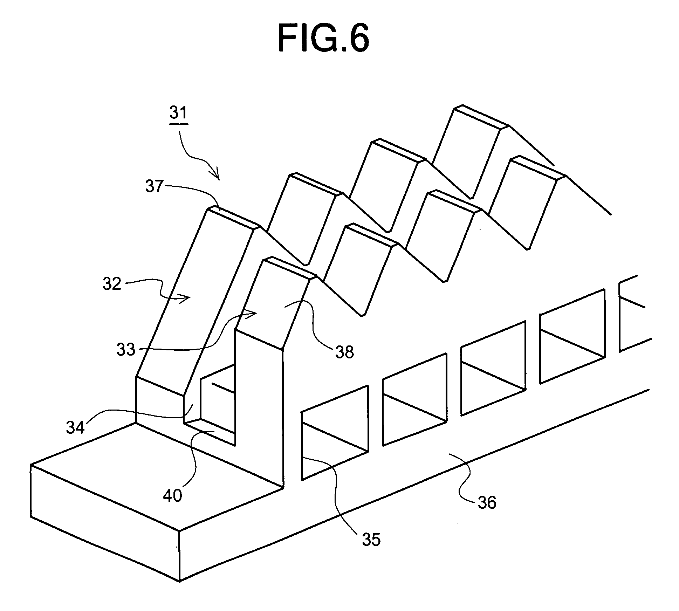

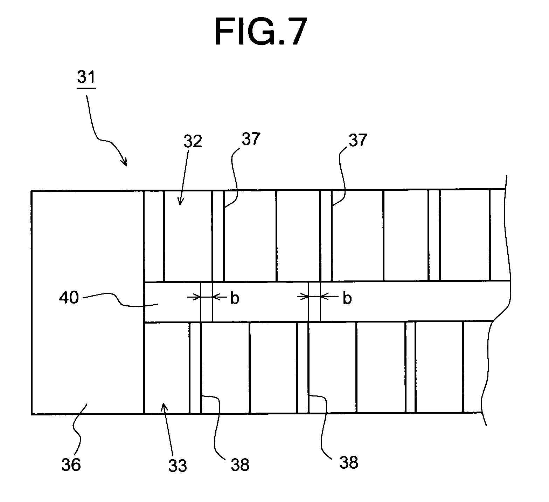

FIGS. 6 and 7 show a preferred embodiment of a resin backlashless rack 31 according to the present invention. FIG. 6 is a perspective view of the resin backlashless rack 31, and FIG. 7 is a plan view of the resin backlashless rack 31.

As shown in these figures, the resin backlashless rack 31 for meshing with a pinion (not shown) comprises first and second rack portions 32 and 33 which are separated from each other in facewidth directions of the pinion and which are supported on a substantially plate-shaped base 36 by means of a plurality of ribs 34 and 35, respectively, so as to be integrated therewith. The teeth 37 of the first rack portion 32 and the teeth 38 of the second rack portion 33 are formed so as to have a greater dislocation b in pitch line directions than backlash which is set between the rack and the pinion being a companion gear meshing with the rack.

In this preferred embodiment, the first and second rack portions 32 and 33 are arranged so as to be spaced from each other by a gap 40, and are supported on the base 36 bymeans of the ribs 34 and 35 so as to be separately displaced.

Therefore, if the resin backlashless rack 31 is meshed with the pinion, the ribs 34 and 35 of the first and second rack portions 32 and 33 of the resin backlashless rack 31 are flexibly deformed. Then, the teeth 37 of the first rack portion 32 and the teeth 38 of the second rack portion 33 move in such a direction that the dislocation of the teeth 37 and 38 in pitch line directions decreases, so that the teeth 37 and 38 elastically contact the teeth of the pinion to absorb backlash.

The ribs 34 and 35 of the resin backlashless rack 31 are formed so as to have a thin plate shape. In addition, the connecting portions of the ribs 34 to the first rack portion 32 and to the base 36 extend in facewidth directions, and the connecting portions of the ribs 35 connecting the second rack portion 33 to the base 36 extend in facewidth directions. As a result, in the resin backlashless rack 31 in this preferred embodiment, a portion for molding the first rack portion 32 and a portion for molding the second rack portion 33 can be released from a die in facewidth directions. Thus, the structure of the dies can be simplified, and the price of the dies can be reduced. Since the resin backlashless rack 31 has such a simple structure and since the molded article can be simply separated from the molding die, it is possible to reduce the number of molding steps and the price of products in comparison with a case where the structure of dies is complicated and it is difficult to separate the molded article from the die.

While both of the first and second rack portions 32 and 33 of the resin backlashless rack 31 in this preferred embodiment have been displaced in pitch line directions, the present invention should not be limited thereto, but only one of the first and second rack portions 32 and 33 may be displaced in pitch line directions. Thus, if the resin backlashless rack 31 is meshed with the pinion, one of the first and second rack portions 32 and 33 is displaced in pitch line directions, so that it is possible to absorb backlash which is set between the teeth 37, 38 of the resin backlashless rack 31 and the teeth of the pinion.

While the resin backlashless gear 1 and the resin backlashless rack 31 have been formed of a resin, such as polyacetal, polyamide, polyphenylene sulfide or polybutylene terephthalate, by mainly injection molding, the present invention should not be limited thereto, they may be formed by compression molding or the like.

The resin backlashless gear according to the present invention can be suitably used for a displacement measuring part of a precise measuring apparatus or instrument required to precisely transmit the amount of rotation. The resin backlashless rack according to the present invention can be combined with a pinion to be used for precisely converting a rotational motion into a linear motion or converting a linear motion into a rotational motion, and can be suitably used for a displacement measuring part of a precise measuring apparatus or instrument.

## Claims

1. A resin gear comprising:
a substantially cylindrical inner portion which is rotatable around a rotational axis;
first and second gear portions which are arranged so as to be spaced from each other in directions parallel to said rotational axis and so as to surround said inner portion, each of said first and second gear portions having teeth on an outer periphery thereof;
a plurality of first ribs extending in radial directions to connect said first gear portion to said inner portion so as to allow said first gear portion to be displaced in rotational directions of said inner portion; and
a plurality of second ribs extending in radial directions to connect said second gear portion to said inner portion so as to allow said second gear portion to be displaced in rotational directions of said inner portion,
wherein a dislocation in pitch circle directions between the teeth of said first gear portion and the teeth of said second gear portion is set so as to reduce backlash which is set between the teeth of said first and second gear portions and the teeth of a companion gear meshing with said resin gear.

2. A resin gear as set forth in claim 1, wherein said dislocation is greater than said backlash.

3. A resin gear as set forth in claim 1, wherein each of said first ribs is a thin plate which extends in facewidth directions so that connecting portions of said thin plate to said first gear portion and to said inner portion extend in facewidth directions, and
each of said second ribs is a thin plate which extends in facewidth directions so that connecting portions of said thin plate to said second gear portion and to said inner portion extend in facewidth directions.

4. A resin gear comprising:
a substantially cylindrical inner portion which is rotatable around a rotational axis;
first and second gear portions which are arranged so as to be spaced from each other in directions parallel to said rotational axis and so as to surround said inner portion, each of said first and second gear portions having teeth on an outer periphery thereof;
apluralityof ribs extending in radial directions to connect said first gear portion to said inner portion so as to allow said first gear portion to be displaced in rotational directions of said inner portion; and
a connecting member connecting said second gear portion to said inner portion,
wherein a dislocation in pitch circle directions between the teeth of said first gear portion and the teeth of said second gear portion is set so as to reduce backlash which is set between the teeth of said first and second gear portions and the teeth of a companion gear meshing with said resin gear.

5. A resin gear as set forth in claim 4, wherein said dislocation is greater than said backlash.

6. A resin gear as set forth in claim 4, wherein each of said ribs is a thin plate which extends in facewidth directions so that connecting portions of said thin plate to said first gear portion and to said inner portion extend in facewidth directions.

7. A resin rack comprising:
a base;
first and second rack portions having teeth for meshing with a pinion, said first and second rack portions being arranged so as to be spaced from each other in facewidth directions;
a plurality of first flexibly deformable ribs connecting said first rack portion to said base; and
a plurality of second flexibly deformable ribs connecting said second rack portion to said base,
wherein a dislocation in pitch line directions between the teeth of said first rack portion and the teeth of said second rack portion is set so as to reduce backlash which is set between the teeth of said first and second rack portions and the teeth of said pinion meshing with said resin rack.

8. A resin rack as set forth in claim 7, wherein said dislocation is greater than said backlash.

9. A resin rack as set forth in claim 7, wherein each of said first ribs is a thin plate which extends in facewidth directions so that connecting portions of said thin plate to said first rack portion and to said base extend in facewidth directions, and
each of said second ribs is a thin plate which extends in facewidth directions so that connecting portions of said thin plate to said second rack portion and to said base extend in facewidth directions.

10. A resin rack comprising:
a base;
first and second rack portions having teeth for meshing with a pinion, said first and second rack portions being arranged so as to be spaced from each other in facewidth directions;
a plurality of flexibly deformable ribs connecting said first rack portion to said base; and
a connecting member connecting said second rack portion to said base,
wherein a dislocation in pitch line directions between the teeth of said first rack portion and the teeth of said second rack portion is set so as to reduce backlash which is set between the teeth of said first and second rack portions and the teeth of said pinion meshing with said resin rack.

11. A resin rack as set forth in claim 10, wherein said dislocation is greater than said backlash.

12. A resin rack as set forth in claim 10, wherein each of said ribs is a thin plate which extends in facewidth directions so that connecting portions of said thin plate to said first rack portion and to said base extend in facewidth directions.
